# EUROPÄISCHE PATENTSCHRIFT

(11) **EP 2 656 154 B1**
(45) Veröffentlichungstag und Bekanntmachung des Hinweises auf die Patenterteilung: **03.03.2021**
(21) Anmeldenummer: 11794678.0
(22) Anmeldetag: 01.12.2011
(51) Int. Cl.: G05B 19/042, G01D 5/00, G08C 19/02, H04Q 9/00

(54) **MESSGERÄT**
MEASURING DEVICE
APPAREIL DE MESURE

(30) Priorität: 22.12.2010 DE 102010063949
(43) Veröffentlichungstag der Anmeldung: 30.10.2013
(73) Patentinhaber: Endress+Hauser SE+Co. KG, 79689 Maulburg (DE)
(72) Erfinder: SCHLEITH, Christoph, 79669 Zell i. W. (DE); STRÜTT, Bernd, 79585 Steinen (DE); ARMBRUSTER, Ralf, 79227 Schallstadt (DE); BRUTSCHIN, Wolfgang, 79650 Schopfheim (DE)
(74) Vertreter: Andres, Angelika Maria
(86) Internationale Anmeldenummer: PCT/EP2011/071461
(87) Internationale Veröffentlichungsnummer: WO 2012/084444

(56) Entgegenhaltungen:
- WO-A1-00/75904
- US-A1- 2009 253 388
- US-B1- 6 703 943

## Beschreibung

Die Erfindung betrifft ein Messgerät zur Messung einer Prozessgröße, das ein eine Versorgungsleitung und eine Rückleitung aufweisendes an eine übergeordnete Einheit anschließbares Leitungspaar aufweist, über das im Betrieb eine Energieversorgung des Messgeräts und eine Signalübertragung, insb. eines die Prozessgröße wiedergebenden Ausgangssignals, zwischen Messgerät und übergeordneter Einheit erfolgt, und über das am Messgerät im Betrieb eine Eingangsspannung anliegt, mit einer Eingangsschaltung mit einem in die Versorgungsleitung eingesetzten Längsregler zur Einstellung eines über das Leitungspaar fließender Stroms, einem dem Längsregler nachgeschalteten in einen die Versorgungsleitung mit der Rückleitung verbindenden Querzweig eingesetzten Querregler, und einem an die Eingangsschaltung angeschlossenen über die Eingangsschaltung mit Energie versorgten Messaufnehmer zur Messung der Prozessgröße.

Messgeräte dieser Art werden insb. in der industriellen Mess- und Regeltechnik, sowie in der Automatisierungs- und Prozesssteuerungstechnik zur Messung von Prozessvariablen eingesetzt.

In Abhängigkeit von der zu messenden Prozessvariablen wird hierzu heute eine große Vielzahl verschiedener Messgeräte, wie z.B. Druck-, Temperatur-, Durchfluss- und/oder Füllstandsmessgeräte, eingesetzt.

Diese Messgeräte liefern ein Ausgangssignal, das dem Messwert der erfassten Prozessvariablen entspricht. Dieses Ausgangssignal wird an eine an das Messgerät angeschlossene übergeordnete Einheit, z.B. eine zentrale Steuereinheit, wie z.B. eine Warte oder ein Prozessleitsystem, einer Industrieanlage übertragen. In der Regel erfolgt die gesamte Prozesssteuerung des in der Industrieanlage ablaufenden Herstellungs- und/oder Verarbeitungsprozesses durch die übergeordnete Einheit, wo die Ausgangssignale verschiedener Messgeräte ausgewertet werden und aufgrund der Auswertung Steuersignale für Aktoren erzeugt werden, die den Prozessablauf steuern.

Vorzugsweise werden Messgeräte eingesetzt, die über ein einziges Leitungspaar an die übergeordnete Einheit anschließbar sind, über das sowohl die Energieversorgung des Messgeräts als auch die Signalübertragung zwischen dem Messgerät und der übergeordneten Einheit erfolgt.

Die Signalübertragung dieser häufig auch als 2-Draht Messgeräte bezeichneten Geräte erfolgt vorzugsweise gemäß in der Industrie üblichen Standards.

Gemäß einem dieser Standards erfolgt die Signalübertragung, indem der über das Leitungspaar fließende Strom vom Messgerät auf einen die gemessene Prozessgröße wiedergebenden Stromwert eingestellt wird, der dann von der übergeordneten Einheit gemessen und entsprechend interpretiert wird. Hierfür wird der Strom heute regelmäßig entsprechend der gemessenen Prozessgröße auf Werte zwischen 4 mA und 20 mA eingestellt. Zusätzlich kann diesem die gemessene Prozessgröße wiedergebenden Strom ein Kommunikationssignal überlagert werden, indem der Strom entsprechend einem vorgegebenen Kommunikationsprotokoll um den durch die Prozessgröße vorgegebenen Wert moduliert wird. Hierfür ist heute das durch den HART Standard definierte Kommunikationsprotokoll weit verbreitet, bei dem dem zwischen 4 mA und 20 mA liegenden Strom eine hochfrequente das Kommunikationssignal wiedergebende Schwingung von +/- 0,5 mA überlagert wird.

Eine weitere Gruppe bilden an einen digitalen Datenbus anschließbare Messgeräte, bei denen der durch das Leitungspaar fließende Strom auf einen unabhängig von der gemessenen Prozessgröße vorgegebenen Stromwert eingestellt wird, und diesem Strom das Kommunikationssignal in Form einer hochfrequenten Schwingung überlagert wird. Bekannt Standards hierfür sind PROFIBUS, FOUNDATION FIELDBUS und CAN-BUS.

Messgeräte dieser Art weisen üblicher Weise eine Eingangsschaltung mit einem eine Versorgungsleitung und eine Rückleitung aufweisenden an die übergeordnete Einheit anschließbaren Leitungspaar auf, über das im Betrieb eine Energieversorgung des Messgeräts und eine Signalübertragung, insb. eines die Prozessgröße wiedergebenden Ausgangssignals, zwischen Messgerät und übergeordneter Einheit erfolgt.

An die Eingangsschaltung ist ein über die Eingangsschaltung mit Energie versorgter Messaufnehmer zur Bestimmung der Prozessgröße und zur Erzeugung eines die Prozessgröße wiedergebenden Messsignals angeschlossen.

Die Eingangsschaltung umfasst beispielsweise einen in die Versorgungsleitung eingesetzten Längsregler zur Einstellung eines über das Leitungspaar fließenden Stroms, und einen dem Längsregler nachgeschalteten in einen die Versorgungsleitung mit der Rückleitung verbindenden Querzweig eingesetzten Querregler. Der Messaufnehmer ist hinter dem Querzweig parallel zum Querregler an die Eingangsschaltung angeschlossen. Der Querregler ist im einfachsten Fall eine Z-Diode, über die die am Messaufnehmer anliegende Messaufnehmereingangsspannung vorgegeben wird.

Dem Messgerät steht in der Regel über das Leitungspaar nur eine sehr eng begrenzte über die daran anliegende Eingangsspannung und den vom Längsregler eingestellten Strom vorgegebene Energiemenge zur Verfügung.

Dementsprechend werden heute insb. in Verbindung mit Messaufnehmern mit hohem Energiebedarf, wie z.B. Messaufnehmer von mit Mikrowellen oder mit Ultraschall arbeitenden Füllstandsmessgeräten, Verfahren zur effizienten Nutzung der zur Verfügung stehenden Energie eingesetzt.

Hierzu ist in der DE 10 2006 046 243 A1 ein Verfahren beschrieben, bei dem der Messaufnehmer bedarfsabhängig betrieben wird, und in Zeiten in denen er nicht benötigt wird, ausgeschaltet oder in einen Stand-By Mode versetzt wird.

In der WO 02/07124 A1 ist ein Messgerät zur Messung einer Prozessgröße beschrieben, bei dem die Messaktivitäten des Messaufnehmers an die über das Leitungspaar zur Verfügung stehende Leistung angepasst werden.

Das Messgerät weist ein eine Versorgungsleitung und eine Rückleitung aufweisendes an eine übergeordnete Einheit anschließbares Leitungspaar auf, über das im Betrieb eine Energieversorgung des Messgeräts und eine Signalübertragung, insb. eines Messsignals, zwischen Messgerät und übergeordneter Einheit erfolgt, und über das am Messgerät im Betrieb eine Eingangsspannung anliegt. In der Anmeldung ist eine Messgerätvariante beschrieben, die eine Eingangsschaltung mit einer in die Versorgungsleitung eingesetzten Stromstufe zur Einstellung des über das Leitungspaar fließenden Stroms, und eine der Stromstufe nachgeschaltete in einen die Versorgungsleitung mit der Rückleitung verbindenden Querzweig eingesetzten Schaltung beschrieben. Die Schaltung dient dazu, genau soviel Strom aufzunehmen, dass der Spannungsabfall über der Stromstufe zur Verringerung der Verlustleistung möglichst gering ist. Entsprechend wird der Spannungsabfall über der Stromstufe auf einen für den Betrieb der Stromstufe erforderlichen Mindestwert reduziert.

Ein weiteres Beispiel eines Messgeräts, bei dem die Energieversorgung und die Ausgabe der gemessenen Prozessgröße über ein einziges Leitungspaar erfolgt, ist in der WO 00/75904 A1 beschrieben. Auch dort weist das Messgerät eine Eingangsschaltung auf, über die der daran angeschlossene Messaufnehmer mit Energie versorgt wird. Die Eingangsschaltung weist einen in die eingehende Versorgungsleitung eingesetzten Stromsteller auf, der den über das Leitungspaar fließenden Strom auf einen die Prozessgröße wiedergebenden Wert einstellt. Hinter dem Stromsteller ist ein Schaltregler in das Leitungspaar eingesetzt, über den der Messaufnehmer gespeist wird. Auch bei diesem Messgerät wird die Stromaufnahme des Messaufnehmers zur Verringerung der Verlustleistung derart gesteuert, dass der Spannungsabfall über den Stromsteller so klein wie möglich ist. Bei Schaltreglern mit einer eingangsseitigen Kapazität könnten sprunghafte Änderungen des einzustellenden Stromwertes aufgrund der in dem Kondensator gespeicherten Energie dazu führen, dass der Ausgang des Stromstellers an einem höheren Potential anliegt als dessen Eingang. Um dies Auszuschließen ist vor dem Stromsteller zwischen den beiden Leitungen des Leitungspaars ein weiterer Stromsteller eingesetzt, der ausschließlich bei Bedarf zur Vermeidung dieses Problems eingesetzt wird.

Das im Stand der Technik beschriebene Vorgehen, den Spannungsabfall über den eingangsseitigen Längsregler möglichst gering zu halten, bietet den Vorteil, dass für den Messaufnehmer grundsätzlich mehr Energie zur Verfügung steht.

Es ist jedoch auch je nach Anwendung mit erheblichen Nachteilen verbunden. Ein Problem besteht darin, dass diese Messgeräte aufgrund des geringen Spannungsabfalls über den Längsregler störempfindlicher werden. So können z.B. Spannungsschwankungen der Eingangsspannung, wie sie z.B. durch äußere Störungen, durch auf Busleitungen überlagerte digitale Kommunikationssignale, oder Schwankungen der Energieaufnahme anderer an den gleichen Bus angeschlossener Busteilnehmer entstehen können, vom Längsregler um so schlechter ausgeglichen werden, je niedriger der darüber abfallende Spannungsabfall ist.

Ein weiteres Problem besteht darin, dass die Eingangsimpedanz des Messgeräts maßgeblich vom Spannungsabfall über den eingangseitigen Längsregler mitbestimmt wird.

Eine niedrige Eingangsimpedanz führt jedoch bei einem Anschluss des Messgeräts an eine Busleitung zu einer stärkeren Belastung der Busleitung. Werden mehrere Messgeräte parallel zueinander an eine Busleitung angeschlossenen, so ist die Anzahl der maximal an die gleiche Busleitung anschließbaren Messgeräte maßgeblich durch deren Eingangsimpedanz begrenzt. Je niedriger die Eingangsimpedanzen der Messgeräte sind, umso geringer ist die Anzahl der maximal parallel zueinander an die gleiche Busleitung anschließbaren Messgeräte.

Darüber hinaus führen niedrige Eingangsimpedanzen zu einer stärkeren Dämpfung von vom Messgerät zu empfangenden dem über das Leitungspaar fließenden Strom überlagerten Kommunikationssignalen.

Aus US 6 703 943 B1 ist schon ein Messgerät bekannt, mit einem in eine Versorgungsleitung eingesetzten Längsregler, einem dem Längsregler nachgeschalteten in einen die Versorgungsleitung mit einer Rückleitung verbindenden Querzweig eingesetzten Querregler, und einer Vorrichtung zur Einstellung eines über den Längsregler anliegenden Spannungsabfalls.

Es ist eine Aufgabe der Erfindung ein Messgerät der eingangs genannten Art anzugeben das möglichst störungsunempfindlich und vielseitig einsetzbar ist. Hierzu besteht die Erfindung in einem Messgerät zur Messung einer Prozessgröße nach Anspruch 1.

Gemäß einer Weiterbildung weist die Kennlinie einen stufenförmigen Verlauf auf, der im Bereich mindestens einer der Stufen des stufenförmigen Verlaufs eine Hysterese aufweist.

Gemäß einer Ausgestaltung stellt die Vorrichtung den Spannungsabfall über den Längsregler für Eingangsspannungen, die unterhalb einer vorgegebenen Mindesteingangsspannung liegen, auf einen für den Betrieb des Längsreglers erforderlichen Mindestwert ein.

Gemäß einer ersten Ausführungsform stellt der Längsregler den Strom in Abhängigkeit von einem die gemessene Prozessgröße wiedergebenden Messsignal der Messeinheit auf einen die Prozessgröße wiedergebenden Wert ein.

Gemäß einer alternativ oder zusätzlich zur ersten Ausführungsform einsetzbaren Ausgestaltung moduliert der Längsregler den Strom in Abhängigkeit von einem vom Messgerät zur übergeordneten Einheit zu übertragenden Signal.

Gemäß einer ersten Weiterbildung der Weiterbildung weist das Messgerät eine Empfangseinrichtung auf, über die die Kennlinie der intelligenten elektronischen Einheit vorgebbar ist.

Gemäß einer zweiten Weiterbildung der Weiterbildung weist das Messgerät eine Empfangseinrichtung auf, über die der Maximalwert und/oder ein Eingangsspannungsschwellwert, bei dem der Maximalwert erreicht wird, der intelligenten elektronischen Einheit vorgebbar ist.

Gemäß einer weiteren Weiterbildung
- ist im Messgerät eine Auswahl verschiedener Kennlinien abgelegt, und
- das Messgerät umfasst eine bidirektionale Kommunikationseinrichtung, über die die Kennlinie aus der vorgegebenen Auswahl auswählbar ist.

Weiter umfasst die Erfindung eine Messanordnung mit mindestens einem Messgerät gemäß der ersten Ausgestaltung, bei der
- das Messgerät parallel zu mindestens einem weiteren Messgerät über dessen Leitungspaar an eine Busleitung angeschlossen ist, und
- der Maximalwert ein in Abhängigkeit von einer Anzahl der parallel zueinander an die Busleitung angeschlossenen Messgeräte vorgegebener Wert ist.

Ein wesentlicher Vorteil der Erfindung besteht darin, dass die Messgeräte aufgrund der in Abhängigkeit von der Eingangsspannung ausgeführten Anhebung des Spannungsabfalls über den Längsregler auf einen über dem für dessen Betrieb erforderlichen Mindestspannungsabfall liegenden Wert eine deutlich geringere Störanfälligkeit gegenüber Schwankungen der Eingangsspannung aufweisen. Das Messgerät erkennt anhand der Eingangsspannung und der Kennlinie selbsttätig, ob genügend Energie für diese Anhebung zur Verfügung steht. Sobald dies der Fall ist, wird über die Kennlinie automatisch eine unter den Bedingungen am Einsatzort größtmögliche Störunempfindlichkeit gegenüber Schwankungen der Eingangsspannung erreicht, ohne dass die Bedingungen am Einsatzort vorab werkseitig bekannt sein müssen.

Ein weiterer Vorteil besteht darin, dass über diese gezielte an die Bedingungen am Einsatzort angepasste Anhebung des Spannungsabfall die Eingangsimpedanz des Messgeräts angehoben wird. Eine hohe Eingangsimpedanz bietet den Vorteil einer geringeren Dämpfung von an das Messgerät übertragenen Kommunikationssignalen.

Darüber hinaus besteht über die gezielte Erhöhung des Spannungsabfalls und damit der Eingangsimpedanz des Messgeräts die Möglichkeit die Anzahl parallel zueinander an eine einzige Busleitung anschließbarer Messgeräte zu erhöhen.

Die Erfindung und weitere Vorteile werden nun anhand der Figuren der Zeichnung, in denen ein Ausführungsbeispiel dargestellt ist, näher erläutert. Gleiche Elemente sind in den Figuren mit denselben Bezugszeichen versehen.
- Fig. 1 zeigt:: ein Blockschaltbild eines erfindungsgemäßen Messgeräts;
- Fig. 2 zeigt:: eine Kennlinie für eine von der Eingangsspannung abhängige Steuerung des Spannungsabfalls über den Längsregler von Fig. 1;
- Fig. 3 zeigt:: eine Kennlinie mit stufenförmigem Verlauf;
- Fig. 4 zeigt:: eine Kennlinie mit stufenförmigem Verlauf, die im Bereich der Stufen eine Hysterese aufweist; und
- Fig. 5 zeigt:: mehrere parallel zueinander an eine Busleitung angeschlossene erfindungsgemäße Messgeräte.

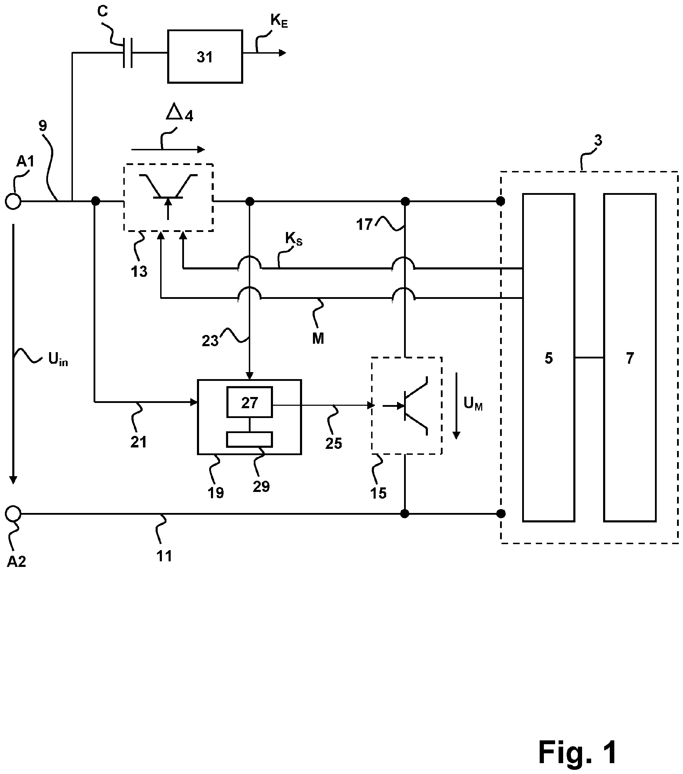

Fig. 1 zeigt ein Blockschaltbild eines erfindungsgemäßen Messgeräts zur Messung einer Prozessgröße, wie z.B. eines Drucks, eines Durchflusses oder eines Füllstands.

Das Messgerät umfasst eine Eingangsschaltung 1 und einen daran angeschlossenen über die Eingangsschaltung 1 mit Energie versorgten Messaufnehmer 3. Der Messaufnehmer 3 ist je nach zu messender Prozessgröße beispielsweise ein Druckmessaufnehmer, ein Durchflussmessaufnehmer oder eine Füllstandsmesseinheit. Der Messaufnehmer 3 dient zur Bestimmung der Prozessgröße und zur Erzeugung eines die Prozessgröße wiedergebenden Messsignals M. Hierzu umfasst er beispielsweise eine Messelektronik 5 und einen daran angeschlossenen Messwandler 7, z.B. einen Sensor oder eine Sonde.

Das Messgerät ist über ein einziges eine Versorgungsleitung 9 und eine Rückleitung 11 aufweisendes Leitungspaar an eine hier nicht dargestellte übergeordnete Einheit anschließbar, über das im Betrieb eine Energieversorgung des Messgeräts und eine Signalübertragung, insb. eines die Prozessgröße wiedergebenden Ausgangssignals, zwischen Messgerät und übergeordneter Einheit erfolgt. Im Betrieb liegt zwischen den beiden Anschlüssen A1 und A2 der Eingangsschaltung 1 eine von der übergeordneten Einheit bereit gestellte Eingangsspannung Uᵢₙ an.

Die Eingangsschaltung 1 umfasst einen in die Versorgungsleitung 9 eingesetzten hier nur schematisch als Transistor dargestellten Längsregler 13, der dazu dient, einen über das Leitungspaar fließenden Strom I einzustellen.

Dies geschieht vorzugsweise gemäße einem der zuvor beschriebenen Standards.

So kann der über das Leitungspaar fließende Strom I vom Längsregler 13 anhand des dem Längsregler 13 zugeführten Messsignals M des Messaufnehmers 3 auf einen die gemessene Prozessgröße wiedergebenden Stromwert, vorzugsweise zwischen 4 mA und 20 mA, eingestellt werden, der dann von der übergeordneten Einheit gemessen und entsprechend interpretiert wird. Zusätzlich kann diesem die gemessene Prozessgröße wiedergebenden Stromwert ein dem Längsregler 13 beispielsweise ebenfalls von der Messelektronik 5 des Messaufnehmers 3 vorgegebenes Kommunikationssignal K_{S} überlagert werden, indem der Strom entsprechend einem vorgegebenen Kommunikationsprotokoll um den durch die Prozessgröße vorgegebenen Wert moduliert wird. Hierfür wird vorzugsweise das durch den HART Standard definierte Kommunikationsprotokoll verwendet, bei dem dem zwischen 4 mA und 20 mA liegenden Strom eine hochfrequente das Kommunikationssignal K_{S} wiedergebende Schwingung von +/- 0,5 mA überlagert wird.

Alternativ kann der durch das Leitungspaar fließende Strom zur Anbindung des Messgeräts an einen digitalen Datenbus auf einen unabhängig von der gemessenen Prozessgröße vorgegebenen Stromwert eingestellt werden, dem ein beispielsweise von der Messelektronik 5 des Messaufnehmers 3 erzeugtes Kommunikationssignal K_{S}, insb. ein die gemessene Prozessgröße wiedergebendes Kommunikationssignal, in Form einer hochfrequenten Schwingung überlagert wird. Bekannte Standards hierfür sind PROFIBUS, FOUNDATION FIELDBUS und CAN-BUS.

In Serie zu dem Längsregler 13 ist dem Längsregler 13 ein Querreglers 15 nachgeschaltet, der in einen die Versorgungsleitung 9 mit der Rückleitung verbindenden Querzweig 17 eingesetzt ist. Die Eingangsspannung Uᵢₙ entspricht damit einer Summe aus einem über den Längsregler 13 bestehenden Spannungsabfall ΔU und einer über den Querzweig 17 abfallenden Spannung U_{M}, die zugleich auch der Versorgungsspannung des parallel zum Querzweig 17 hinter den Querzweig 17 angeordneten Messaufnehmers 3 entspricht.

Erfindungsgemäß ist eine Vorrichtung 19 zur Einstellung des über den Längsregler 13 anliegenden Spannungsabfalls ΔU vorgesehen, die den Spannungsabfall ΔU in Abhängigkeit von der anliegenden Eingangsspannung Uᵢₙ auf einen durch eine Kennlinie ΔUₛₒₗₗ(Uᵢₙ) vorgegebenen Wert einstellt. Die Kennlinie ΔUₛₒₗₗ(Uᵢₙ) ordnet den möglichen Eingangsspannungswerten der Eingangsspannung Uᵢₙ einen Sollwert ΔUₛₒₗₗ für den Spannungsabfall ΔU zu, der von der Vorrichtung 19 eingestellt wird.

Hierzu bestimmt die Vorrichtung 19 über eine erste vor dem Längsregler 13 an die Versorgungsleitung 9 angeschlossene Messleitung 21 die Eingangsspannung Uᵢₙ und über die Eingangsspannung Uᵢₙ und eine zweite hinter dem Längsregler 13 an die Versorgungsleitung 9 angeschlossene Messleitung 23 den Spannungsabfall ΔU. Die Einstellung des Spannungsabfalls ΔU über den Längsregler 13 erfolgt vorzugsweise über eine entsprechende Ansteuerung der Querreglers 15 mit dem die Vorrichtung 19 hierzu über eine Steuerleitung 25 verbunden ist.

Die Vorrichtung 19 kann eine rein analoge entsprechend der Kennlinie ΔUₛₒₗₗ(Uᵢₙ) ausgelegte Steuerschaltung sein, die über eine entsprechende Steuerung des Querreglers 15 das Spannungsteilerverhältnis von Längs- und Querregler 13, 15 zueinander entsprechend der Kennlinie ΔUₛₒₗₗ(Uᵢₙ) derart beeinflusst, dass über den Längsregler 13 der für die jeweilige Eingangsspannung Uᵢₙ vorgegebene Spannungsabfall ΔUₛₒₗₗ entsteht.

Alternativ kann die Vorrichtung 19 zur Einstellung des Spannungsabfalls ΔU - wie in Fig. 1 dargestellt - eine intelligente elektronische Einheit 27, insb. einen Mikroprozessor oder einen Mikrocontroller, umfassen der den Spannungsabfall ΔU über den Längsregler 13 anhand der am Messgerät anliegenden Eingangsspannung Uᵢₙ und dem Spannungsabfall ΔU über dem Längsregler 13 durch eine entsprechende Ansteuerung des Querreglers 15 auf den durch die Kennlinie ΔUₛₒₗₗ(Uᵢₙ) vorgegebenen Wert regelt. In dem Fall ist die Kennlinie ΔUₛₒₗₗ(Uᵢₙ) in einem der intelligenten elektronischen Einheit 27 zugeordneten Speicher 29 abgelegt.

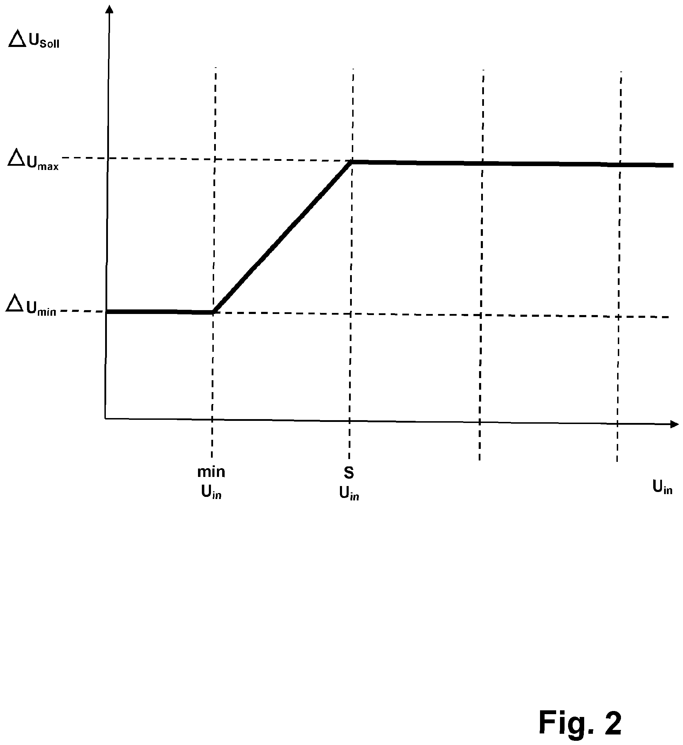

Die Kennlinie ΔUₛₒₗₗ(Uᵢₙ) weist beispielsweise den in Fig. 2 dargestellten charakteristischen Verlauf auf, bei dem der Sollwert ΔUₛₒₗₗ für den Spannungsabfall ΔU über den Längsregler 13 bei niedrigen Eingangsspannungen Uᵢₙ einem für den Betrieb des Längsreglers 13 erforderlichen Mindestwert ΔUₘᵢₙ entspricht, und sobald die Eingangsspannung Uᵢₙ eine vorgegebene Mindesteingangsspannung Uᵢₙ^{min} übersteigt, mit steigender Eingangsspannung Uᵢₙ auf einen vorgegebenen Maximalwert ΔUₘₐₓ ansteigt. Die Steilheit des Anstiegs der Kennlinie in dem Bereich zwischen der Mindesteingangsspannung Uᵢₙ^{min} und einem vorgegebenen Eingangsspannungsschwellwert Uᵢₙ^{S}, bei dem der Maximalwert ΔUₘₐₓ erreicht wird, wird vorzugsweise an den Energiebedarf des Messaufnehmers 3 unter Berücksichtigung der für die Übertragung des die Prozessgröße wiedergebenden Ausgangssignals gewählte Form als die Prozessgröße wiedergebendem Stromwert oder als einem festen Stromwert überlagertem Kommunikationssignals angepasst.

Hierdurch wird zum einen bewirkt, dass dem Messaufnehmer 3 bei niedrigen Eingangsspannungen Uᵢₙ soviel Energie wie möglich zugeführt wird, indem hier die Verluste über den Längsregler 13 so gering wie möglich gehalten werden. Sobald dem Messgerät jedoch über eine die Mindesteingangsspannung Uᵢₙ^{min} übersteigende Eingangsspannung Uᵢₙ mehr Energie zur Verfügung steht, wird der Spannungsabfall ΔU über den Längsregler 13 über den Mindestwert ΔUₘᵢₙ hinaus angehoben, und damit die eingangs beschriebene Störempfindlichkeit des Messgeräts gegenüber Schwankungen der Eingangsspannung Uᵢₙ deutlich reduziert.

Damit wird dem Messaufnehmer 3 nur dann - auf Kosten der Störunempfindlichkeit - soviel Energie wie möglich zugeführt, wenn dieser sie auch tatsächlich zwingend benötigt. Sobald dies aufgrund einer höheren Eingangsspannung Uᵢₙ nicht mehr zwingend erforderlich ist, wird der Spannungsabfall ΔU über den Längsregler 13 automatisch über die Vorrichtung 19 angehoben, und damit die Störunempfindlichkeit verbessert.

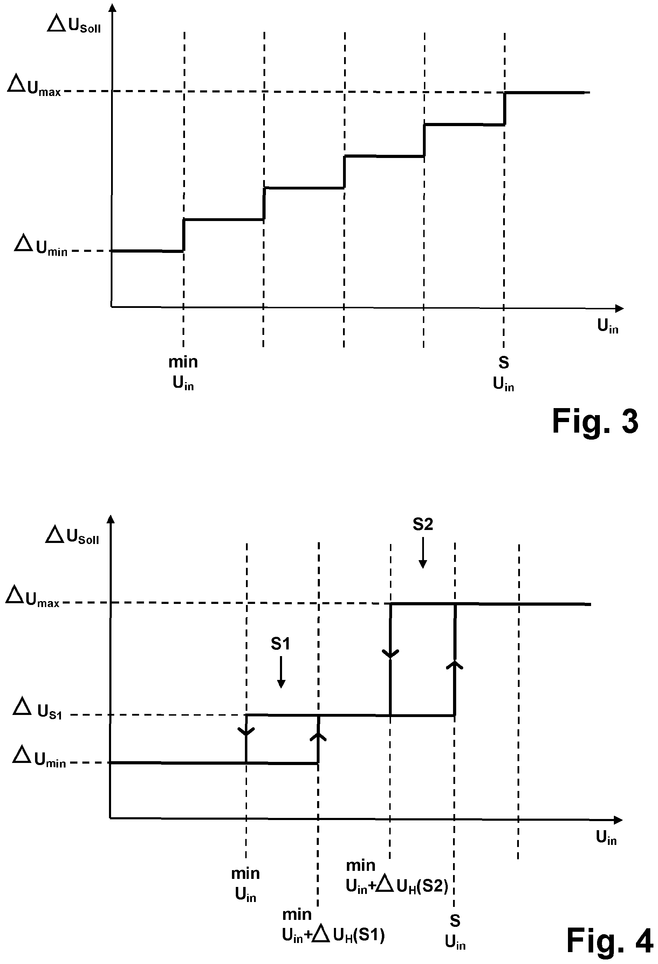

Die Figuren 3 und 4 zeigen zwei weitere Ausführungsbeispiele für die Kennlinie ΔUₛₒₗₗ(Uᵢₙ), über die der Spannungsabfall ΔU über den Längsregler 13 eingestellt wird.

In dem in Fig. 3 dargestellten Ausführungsbeispiel steigt der für den Spannungsabfall ΔU vorgegebene Wert ΔUₛₒₗₗ oberhalb der vorgegebenen Mindesteingangsspannung Uᵢₙ^{min} in Abhängigkeit von der Eingangsspannung Uᵢₙ stufenförmig auf den Maximalwert ΔUₘₐₓan.

In dem in Fig. 4 dargestellten Ausführungsbeispiel weist die Kennlinie ΔUₛₒₗₗ(Uᵢₙ) oberhalb der vorgegebenen Mindesteingangsspannung Uᵢₙ^{min} ebenfalls einen stufenförmigen Anstieg auf den Maximalwert ΔUₘₐₓ auf. Im Unterschied zu der in Fig. 3 dargestellten Variante weist die Kennlinie ΔUₛₒₗₗ(Uᵢₙ) hier jedoch zumindest im Bereich einer der Stufen S1, S2, vorzugsweise - wie hier dargestellt - im Bereich aller Stufen S1, S2 eine Hysterese vorgegebener Bereite ΔU_{H}(S1), ΔU_{H}(S2) auf. Die dargestellte Kennlinie ΔUₛₒₗₗ(Uᵢₙ) weist eine unmittelbar oberhalb der Mindesteingangsspannung Uᵢₙ^{min} einsetzende erste Stufe S1, bei der der Sollwert ΔUₛₒₗₗ des Spannungsabfalls ΔU vom Mindestwert ΔUₘᵢₙ auf einen Stufenwert ΔU_{S1} ansteigt, und eine unmittelbar unterhalb des Eingangsspannungsschwellwerts Uᵢₙ^{S} einsetzende zweite Stufe S2, bei der Sollwert ΔUₛₒₗₗ des Spannungsabfalls ΔU vom Stufenwert ΔU_{S1} auf den Maximalwert ΔUₘₐₓ ansteigt, auf. Die Hysteresen bewirken, dass die Erhöhung des Spannungsabfall ΔU bei ansteigenden Eingangsspannungen Uᵢₙ an der jeweiligen Stufe S1, S2 bei einer höheren Eingangsspannung Uᵢₙ erfolgt, als dessen Erniedrigung bei absinkender Eingangsspannung Uᵢₙ. In dem dargestellten Beispiel steigt der Sollwert ΔUₛₒₗₗ des Spannungsabfalls ΔU bei steigender Eingangsspannung Uᵢₙ dementsprechend bei der Eingangsspannung Uᵢₙ^{min} + ΔU_{H}(S1) auf den Stufenwert ΔU_{S1} an, während der Sollwert ΔUₛₒₗₗ bei sinkender Eingangsspannung Uᵢₙ bei der Mindesteingangsspannung Uᵢₙ^{min} vom Stufenwert ΔU_{S1} auf den Minimalwert ΔUₘᵢₙ abfällt. Entsprechend steigt der Sollwert ΔUₛₒₗₗ des Spannungsabfalls ΔU im Bereich der zweiten Stufe S2 bei steigender Eingangsspannung Uᵢₙ erst bei dem Eingangsspannungsschwellwert Uᵢₙ^{S} auf den Maximalwert ΔUₘₐₓ an, während der Sollwert ΔUₛₒₗₗ hier bei sinkender Eingangsspannung Uᵢₙ bei der um die Hysteresebreite ΔU_{H}(S2) unterhalb des Eingangsspannungsschwellwert Uᵢₙ^{S} liegenden Eingangsspannung Uᵢₙ^{S} - ΔU_{H}(S2) vom Maximalwert Uₘₐₓ auf den Stufenwert ΔU_{S} abfällt.

Die Hysterese bietet den Vorteil, dass auch dann noch ein zeitlich stabiler Spannungsabfall ΔU eingestellt werden kann, wenn die Eingangsspannung Uᵢₙ geringfügig um den Schwellwert der jeweiligen Stufe S1, S2, hier die Mindesteingangsspannung Uᵢₙ^{min} und der Eingangsspannungsschwellwert Uᵢₙ^{S}, schwankt. Dies ist insb. dann von Vorteil, wenn dem über das Leitungspaar fließenden Strom vom Messgerät generierte oder zum Messgerät gesendete Kommunikationssignale K_{S} oder K_{E} überlagert sind, die unter Umständen geringfügige Schwankungen der Eingangsspannung Uᵢₙ verursachen können.

Während in Messgeräte mit rein analoger Vorrichtung zur Einstellung des Spannungsabfalls ΔU über den Längsregler 13 nur eine fest vorgegebene Kennlinie ΔUₛₒₗₗ(Uᵢₙ) implementiert werden kann, bietet die hier dargestellte Vorrichtung 19 aufgrund der intelligenten elektronischen Einheit 27 die Möglichkeit, auch an spezielle Einsatzgebiete für das Messgerät angepasste unterschiedliche Kennlinien ΔUₛₒₗₗ(Uᵢₙ) umsetzen zu können. Hierzu kann die jeweilige anwendungs-spezifische Kennlinie ΔUₛₒₗₗ(Uᵢₙ) werkseitig im Speicher 29 abgelegt werden. Alternativ können in der Regel ohnehin vorhandene Schnittstellen des Messgeräts zur Implementierung der jeweiligen anwendungs-spezifischen Kennlinie ΔUₛₒₗₗ(Uᵢₙ) genutzt werden. So können beispielsweise mehrere verschiedene, sich beispielsweise durch den Verlauf des Anstiegs des Sollwerts ΔUₛₒₗₗ für den Spannungsabfall ΔU, den Eingangsspannungsschwellwert Uᵢₙ^{S} und/oder den Maximalwert ΔUₘₐₓ unterscheidende Kennlinien ΔUₛₒₗₗ(Uᵢₙ) in dem Speicher 29 abgelegt werden, von den der Anwender im Rahmen einer Inbetriebnahme des Geräts über eine eine bidirektionale Kommunikation ermöglichende Schnittstelle, wie z.B. eine Bedienoberfläche, die für seine Anwendung am besten geeignete Kennlinie ΔUₛₒₗₗ(Uᵢₙ) auswählt. Alternativ kann auch nur der Maximalwert ΔUₘₐₓ und/oder der Eingangsspannungsschwellwert Uᵢₙ^{S} anwendungs-spezifisch aus einer vorgegebenen Auswahl ausgewählt oder vom Anwender vorgegeben werden.

Bei Messgeräten, die - wie hier dargestellt - eine Empfangseinrichtung 31 zum Empfang von dem über das Leitungspaar einfließendem Strom I überlagerten Kommunikationssignalen K_{E} aufweisen, kann die Vorgabe einer anwendungspezifischen Kennlinie ΔUₛₒₗₗ(Uᵢₙ), eines anwendungs-spezifischen Maximalwert ΔUₘₐₓ und/oder eines anwendungs-spezifischen Eingangsspannungsschwellwert Uᵢₙ^{S} auch über die an das Leitungspaar angeschlossene übergeordnete Einheit erfolgen. Die Empfangseinrichtung 31 ist beispielsweise ein Modem, dem das Kommunikationssignal K_{E} über einen eingangsseitig vor dem Längsregler 13 an die Versorgungsleitung 9 angeschlossenen Kondensator C zugeführt wird. Hierzu können die diesbezüglich eingehenden Kommunikationssignale K_{E} im Messgerät entweder unmittelbar der Vorrichtung 19 zur Einstellung des Spannungsabfalls ΔU zugeführt, oder zunächst in einer weiteren beispielsweise in der Messelektronik 5 integrierten Schaltung verarbeitet werden, die dann die erforderlichen Informationen der intelligenten Einheit 27 zuführt.

In Verbindung mit eine Empfangseinrichtung 31 aufweisenden Messgeräten bietet die abhängig von der zur Verfügung stehenden Eingangspannung Uᵢₙ bewusst ausgeführte Erhöhung des Spannungsabfalls ΔU über den Längsregler 13 den Vorteil, dass die eingehenden Kommunikationssignale K_{E} umso weniger gedämpft werden, je höher der Spannungsabfall ΔU über den Längsregler 13 ist.

Bei Messgeräten, die - wie das hier dargestellte Messgerät- eine bidirektionale Kommunikationseinrichtung zur Kommunikation über das Leitungspaar umfassen, kann der Anwender natürlich ebenfalls über die übergeordnete Einheit aus einer vorgegebenen Auswahl an im Messgerät abgelegten Kennlinien ΔUₛₒₗₗ(Uᵢₙ), Eingangsspannungsschwellwerten Uᵢₙ^{S} und/oder Maximalwerten ΔUₘₐₓ auswählen.

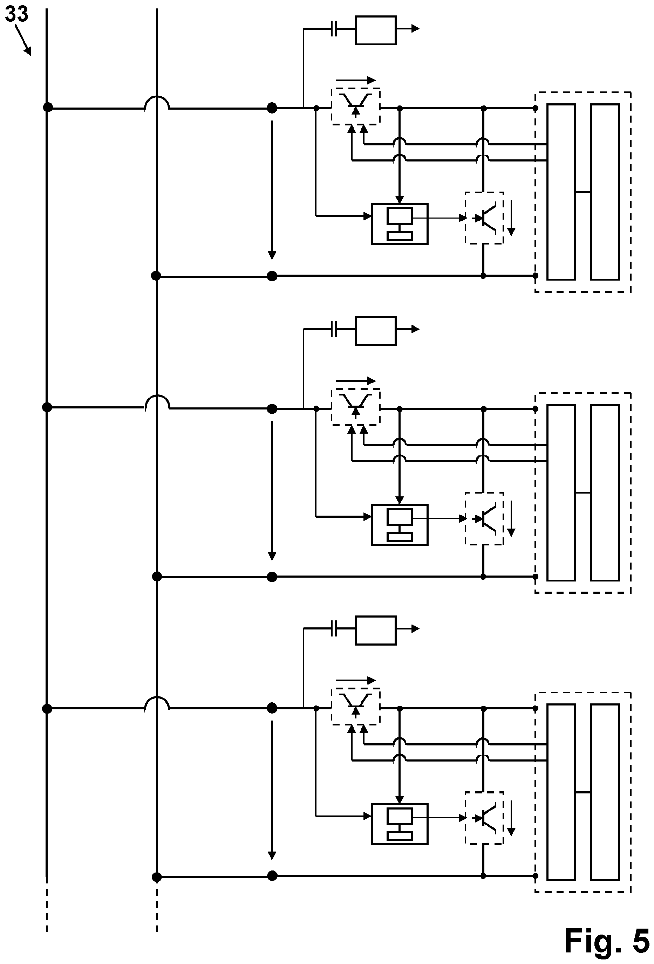

Fig. 5 zeigt eine Messanordnung in der ein erfindungsgemäßes Messgerät parallel zu weiteren, in dem Ausführungsbeispiel ebenfalls erfindungsgemäßen, Messgeräten über dessen Leitungspaar an eine Busleitung 33 angeschlossen ist. In diesen Anwendungen bietet die Erfindung den Vorteil, dass der Maximalwert ΔUₘₐₓ für den Spannungsabfall ΔU in Abhängigkeit von einer Anzahl der parallel zueinander an die Busleitung 33 angeschlossenen bzw. anzuschließenden Messgeräte vorgegeben werden kann. Dabei bewirkt die Erhöhung des Spannungsabfalls ΔU eine Erhöhung der Eingangsimpedanz des jeweiligen Messgeräts und führt in Folge zu einer geringeren Belastung der Busleitung 33 durch das jeweilige Messgerät. Entsprechend können umso mehr Messgeräte an die Busleitung 33 angeschlossen werden, je höher deren Eingangsimpedanz ist.

Aufgrund der über die Kennlinie ΔUₛₒₗₗ(Uᵢₙ) gesteuerten Einstellung des Spannungsabfalls ΔU über den Längsregler 13 kann dass Messgerät nun äußerst flexibel eingesetzt werden, und bietet in jeder Anwendung die für die dort vorliegenden Eingangsspannungsverhältnisse maximal erreichbare Störunempfindlichkeit.

### Bezugszeichenliste:

- 1: Eingangsschaltung
- 3: Messaufnehmer
- 5: Messelektronik
- 7: Messwandler
- 9: Versorgungsleitung
- 11: Rückleitung
- 13: Längsregler
- 15: Querregler
- 17: Querzweig
- 19: Vorrichtung zur Einstellung des Spannungsabfalls
- 21: Messleitung
- 23: Messleitung
- 25: Steuerleitung
- 27: intelligente elektronische Einheit
- 29: Speicher
- 31: Empfangseinrichtung
- 33: Busleitung

## Patentansprüche

1. Messgerät zur Messung einer Prozessgröße mit
- einer Eingangsschaltung (1) mit
-- einem eine Versorgungsleitung (9) und eine Rückleitung (11) aufweisenden an eine übergeordnete Einheit anschließbaren Leitungspaar, über das im Betrieb eine Energieversorgung des Messgeräts und eine Signalübertragung, insb. eines die Prozessgröße wiedergebenden Ausgangssignals, zwischen Messgerät und übergeordneter Einheit erfolgt, und über das am Messgerät im Betrieb eine Eingangsspannung (Uᵢₙ) anliegt,
-- einem in die Versorgungsleitung (11) eingesetzten Längsregler (13) zur Einstellung eines über das Leitungspaar fließenden Stroms,
-- einem dem Längsregler (13) nachgeschalteten in einen die Versorgungsleitung (9) mit der Rückleitung (11) verbindenden Querzweig (17) eingesetzten Querregler (15), und
-- einer Vorrichtung (19) zur Einstellung eines über den Längsregler (13) anliegenden Spannungsabfalls (ΔU), die den Spannungsabfall (ΔU) über dem Längsregler (13) derart in Abhängigkeit von der anliegenden Eingangsspannung (Uᵢₙ) für Eingangsspannungen (Uᵢₙ), die größer als eine vorgegebene Mindesteingangsspannung (Uᵢₙ^{min}) sind, auf einen durch eine Kennlinie (ΔUₛₒₗₗ(Uᵢₙ)) für die jeweilige Eingangsspannung (Uᵢₙ) vorgegebenen oberhalb eines für den Betrieb des Längsreglers (13) erforderlichen Mindestwert (ΔUₘᵢₙ) liegenden Wert einstellt, so dass der vorgegebene Wert des Spannungsabfalls (ΔU) für Eingangsspannungen (Uᵢₙ), die oberhalb der vorgegebenen Mindesteingangsspannung (Uᵢₙ^{min}) liegen, mit steigender Eingangsspannung (Uᵢₙ) auf einen vorgegebenen Maximalwert (ΔUₘₐₓ) ansteigt,
wobei die Vorrichtung (19) zur Einstellung des Spannungsabfalls (ΔU) eine intelligente elektronische Einheit (27) aufweist, die den Spannungsabfall (ΔU) über den Längsregler (13) anhand der am Messgerät anliegenden Eingangsspannung (Uᵢₙ) und dem Spannungsabfall (ΔU) über dem Längsregler (13) durch eine entsprechende Ansteuerung des Querreglers (15) auf den vorgegebenen Wert regelt, und
- einem an die Eingangsschaltung (1) angeschlossenen über die Eingangsschaltung (1) mit Energie versorgten Messaufnehmer (3) zur Messung der Prozessgröße.

2. Messgerät nach Anspruch 1, bei dem die Kennlinie (ΔUₛₒₗₗ(Uᵢₙ))
einen stufenförmigen Verlauf aufweist, der im Bereich mindestens einer der Stufen (S1, S2) des stufenförmigen Verlaufs eine Hysterese aufweist.

3. Messgerät nach Anspruch 1, bei dem
die Vorrichtung (19) den Spannungsabfall (ΔU) über den Längsregler (13) für Eingangsspannungen (Uᵢₙ), die unterhalb einer vorgegebenen Mindesteingangsspannung (Uᵢₙ^{min}) liegen, auf einen für den Betrieb des Längsreglers (13) erforderlichen Mindestwert (ΔUₘᵢₙ) einstellt.

4. Messgerät nach Anspruch 1, bei dem der Längsregler (13) den Strom in Abhängigkeit von einem die gemessene Prozessgröße wiedergebenden Messsignal (M) der Messeinheit (3) auf einen die Prozessgröße wiedergebenden Wert einstellt.

5. Messgerät nach Anspruch 1 oder 4, bei dem der Längsregler (13) den Strom in Abhängigkeit von einem vom Messgerät zur übergeordneten Einheit zu übertragenden Signal (Ks) moduliert.

6. Messgerät nach Anspruch 1,
das eine Empfangseinrichtung (31) aufweist, über die die Kennlinie ((ΔUₛₒₗₗ(Uᵢₙ)) der intelligenten elektronischen Einheit (27) vorgebbar ist.

7. Messgerät nach Anspruch 1,
das eine Empfangseinrichtung (31) aufweist, über die der Maximalwert (ΔUₘₐₓ) und/oder ein Eingangsspannungsschwellwert (Uᵢₙ^{S}), bei dem der Maximalwert erreicht (ΔUₘₐₓ) wird, der intelligenten elektronischen Einheit (27) vorgebbar ist.

8. Messgerät nach Anspruch 1, bei dem
- im Messgerät eine Auswahl verschiedener Kennlinien abgelegt ist, und
- das Messgerät eine bidirektionale Kommunikationseinrichtung umfasst, über die die Kennlinie ((ΔUₛₒₗₗ(Uᵢₙ)) aus der vorgegebenen Auswahl auswählbar ist.

9. Messanordnung mit mindestens einem Messgerät gemäß Anspruch 1, bei der
- das Messgerät parallel zu mindestens einem weiteren Messgerät über dessen Leitungspaar an eine Busleitung (33) angeschlossen ist, und
- der Maximalwert (ΔUₘₐₓ) ein in Abhängigkeit von einer Anzahl der parallel zueinander an die Busleitung (33) angeschlossenen Messgeräte vorgegebener Wert ist.

## Claims

1. Measuring device for measuring a process variable with
- an input circuit (1) with
-- a pair of cables which can be connected to a higher-level unit, said cable pair consisting of a supply cable (9) and a return cable (11) and via which, during operation, energy is supplied to the measuring device and a signal is transmitted, particularly an output signal representing the process variable, between the measuring device and a higher-level unit, and via which an input voltage (Uᵢₙ) is applied at the measuring device during operation,
-- a linear regulator (13) inserted into the supply cable (9), said regulator being designed to regulate a current flowing through the pair of cables,
-- a shunt regulator (15) located downstream from the linear regulator (13) and inserted into a cross branch connecting the supply cable (9) to the return cable (11), and
-- an apparatus (19) designed to regulate a voltage drop (ΔU) present via the linear regulator (13), which regulates the voltage drop (ΔU) over the linear regulator (13) - depending on the input voltage present (Uᵢₙ) for input voltages (Uᵢₙ) that are greater than a predefined minimum input voltage (Uᵢₙ^{min}) - to a value, which is predefined by a characteristic curve (ΔUₛₒₗₗ(Uᵢₙ)) for the input voltage (Uᵢₙ) and greater than a minimum value (ΔUₘᵢₙ) required for the operation of the linear regulator (13), in such a way that the predefined value of the voltage drop (ΔU) for input voltages (Uᵢₙ) which are greater than the predefined minimum input voltage (Uᵢₙ^{min}) increases to a predefined maximum value (ΔUₘₐₓ) as the input voltage (Uᵢₙ) increases,
wherein the apparatus (19) to regulate the voltage drop (ΔU) has an intelligent electronic unit (27), which regulates the voltage drop (ΔU) via the linear regulator (13) to the predefined value on the basis of the input voltage (Uᵢₙ) present at the measuring device and the voltage drop (ΔU) via the linear regulator (13) by appropriately controlling the shunt regulator (15), and
- a sensor (3) connected to the input circuit (1) and powered via the input circuit (1), said sensor being designed to measure the process variable.

2. Measuring device as claimed in Claim 1, wherein the characteristic curve ((ΔUₛₒₗₗ(Uᵢₙ)) has a step-like pattern which has a hysteresis in the area of at least one of the steps (S1, S2) of the step-like pattern.

3. Measuring device as claimed in Claim 1, wherein the apparatus (19) regulates the voltage drop (ΔU) via the linear regulator (13) for input voltages (Uᵢₙ) that are below a predefined minimum input voltage (Uᵢₙ^{min}) to a minimum value (ΔUₘᵢₙ) required for the operation of the linear regulator (13).

4. Measuring device as claimed in Claim 1, wherein the linear regulator (13) sets the current to a value representing the process variable as a function of a measuring signal (M) of the measuring unit (3) representing the measured process variable.

5. Measuring device as claimed in Claim 1 or 4, wherein the linear regulator (13) modulates the current depending on a signal (Ks) to be transmitted from the measuring device to the higher-level unit.

6. Measuring device as claimed in Claim 1,
which has a reception unit (31) by means of which the characteristic curve ((ΔUₛₒₗₗ(Uᵢₙ)) of the intelligent electronic unit (27) can be predefined.

7. Measuring device as claimed in Claim 1,
which has a reception unit (31) by means of which the maximum value (ΔUₘₐₓ) and/or an input voltage threshold value (Uᵢₙ^{S}) at which the maximum value (ΔUₘₐₓ) is reached can be predefined for the intelligent electronic unit (27).

8. Measuring device as claimed in Claim 1, wherein
- a selection of different characteristic curves are saved in the measuring device, and
- the measuring device comprises a bidirectional communication unit by means of which the characteristic curve ((ΔUₛₒₗₗ(Uᵢₙ)) can be selected from the predefined selection.

9. Measuring arrangement with at least a measuring device as claimed in Claim 1,
wherein
- the measuring device is connected to a bus line (33) in parallel to at least an additional measuring device via its cable pair, and
- the maximum value (ΔUₘₐₓ) is a predefined value that depends on the number of measuring devices connected in parallel to the bus line (33).

## Revendications

1. Appareil destiné à la mesure d'une grandeur de process avec
- un circuit d'entrée (1) avec
-- une paire de câbles pouvant être raccordée à une unité maître, constituée d'un câble d'alimentation (9) et d'un câble de retour (11), paire par l'intermédiaire de laquelle est assurée, en fonctionnement, une alimentation en énergie de l'appareil de mesure et une transmission de signal, notamment d'un signal de sortie représentant la grandeur de process, entre l'appareil de mesure et l'unité maître, et par l'intermédiaire de laquelle une tension d'entrée (Uᵢₙ) est appliquée, en fonctionnement, à l'appareil de mesure,
-- un régulateur longitudinal (13) inséré dans la ligne d'alimentation (9), lequel régulateur est destiné à régler un courant circulant à travers la paire de câbles,
-- un régulateur transversal (15), couplé en aval du régulateur longitudinal (13) et inséré dans une branche en dérivation reliant le câble d'alimentation (9) avec le câble de retour (11), et
-- un dispositif (19) destiné au réglage d'une chute de tension (ΔU) générée via le régulateur longitudinal (13), lequel dispositif règle la chute de tension (ΔU) via le régulateur longitudinal (13) - en fonction de la tension d'entrée présente (Uᵢₙ) pour les tensions d'entrée (Uᵢₙ) qui sont supérieures à la tension d'entrée minimale prédéfinie (Uᵢₙ^{min}) - à une valeur prédéfinie par une courbe caractéristique (ΔUₛₒₗₗ(Uᵢₙ)) pour la tension d'entrée respective (Uᵢₙ) et supérieure à une valeur minimale (ΔUₘᵢₙ) requise pour le fonctionnement du régulateur longitudinal (13), de telle sorte que la valeur prédéfinie de la chute de tension (ΔU) pour les tensions d'entrée (Uᵢₙ) qui sont supérieures à la tension d'entrée minimale prédéfinie (Uᵢₙ^{min}), augmente à une valeur maximale prédéfinie (ΔUₘₐₓ) lorsque la tension d'entrée (Uᵢₙ) augmente,
le dispositif (19) destiné au réglage de la chute de tension (ΔU) comportant une unité électronique intelligente (27), qui règle la chute de tension (ΔU) via le régulateur longitudinal (13) à la valeur prédéfinie sur la base de la tension d'entrée (Uᵢₙ) présente à l'appareil de mesure et de la chute de tension (ΔU) via le régulateur longitudinal (13) par une commande correspondante du régulateur transversal (15), et
- un capteur (3) raccordé au circuit d'entrée (1) et alimenté en énergie via le circuit d'entrée (1), lequel capteur est destiné à mesurer la grandeur de process.

2. Appareil de terrain selon la revendication 1, pour lequel la courbe caractéristique ((ΔUₛₒₗₗ(Uᵢₙ)) présente un tracé en forme de paliers, qui présente une hystérésis dans la zone d'au moins un des paliers (S1, S2) du tracé en forme de paliers.

3. Appareil de terrain selon la revendication 1, pour lequel le dispositif (19) règle la chute de tension (ΔU) via le régulateur longitudinal (13) pour les tensions d'entrée (Uᵢₙ), qui sont inférieures à une tension d'entrée minimale prédéfinie (Uᵢₙ^{min}), à une valeur minimale (ΔUₘᵢₙ) requise pour le fonctionnement du régulateur longitudinal (13).

4. Appareil de terrain selon la revendication 1, pour lequel le régulateur longitudinal (13) ajuste le courant à une valeur représentant la grandeur de process en fonction d'un signal de mesure (M) de l'unité de mesure (3) représentant la grandeur de process mesurée.

5. Appareil de terrain selon la revendication 1 ou 4, pour lequel le régulateur longitudinal (13) module le courant en fonction d'un signal (Ks) à transmettre de l'appareil de mesure à l'unité maître.

6. Appareil de terrain selon la revendication 1,
présentant un dispositif de réception (31), par l'intermédiaire duquel la courbe caractéristique ((ΔUₛₒₗₗ(Uᵢₙ)) de l'unité électronique intelligente (27) est prédéfinissable.

7. Appareil de terrain selon la revendication 1,
qui comporte un dispositif de réception (31), par l'intermédiaire duquel la valeur maximale (ΔUₘₐₓ) et/ou une valeur seuil de tension d'entrée (Uᵢₙ^{S}), à laquelle la valeur maximale (ΔUₘₐₓ) est atteinte, peuvent être prédéfinies pour l'unité électronique intelligente (27).

8. Appareil de terrain selon la revendication 1, pour lequel
- une sélection de différentes courbes caractéristiques est enregistrée dans l'appareil de mesure, et
- l'appareil de mesure comprend un dispositif de communication bidirectionnel, par l'intermédiaire duquel la courbe caractéristique ((ΔUₛₒₗₗ(Uᵢₙ)) peut être sélectionnée à partir de la sélection prédéfinie.

9. Dispositif de mesure avec au moins un appareil de mesure selon la revendication 1, pour lequel
- l'appareil de mesure est raccordé en parallèle à au moins un autre appareil de mesure via sa paire de conducteurs à une ligne de bus (33), et
- la valeur maximale (ΔUₘₐₓ) est une valeur prédéfinie en fonction d'un nombre d'appareils de mesure raccordés en parallèle à la ligne de bus (33).
